# EUROPEAN PATENT APPLICATION

(11) **EP 4 604 498 A1**
(43) Date of publication of application: **20.08.2025**
(21) Application number: 23884630.7
(22) Date of filing: 23.10.2023
(51) Int. Cl.: H04L 67/5651

(54) **COMMUNICATION METHOD, COMMUNICATION APPARATUS, AND COMPUTER-READABLE STORAGE MEDIUM**

(30) Priority: 31.10.2022 CN 202211347850
(71) Applicant: Huawei Technologies Co., Ltd., Shenzhen, Guangdong 518129 (CN)
(72) Inventor: ZHUANG, Shunwan, Shenzhen, Guangdong 518129 (CN); GENG, Nan, Shenzhen, Guangdong 518129 (CN); WANG, Haibo, Shenzhen, Guangdong 518129 (CN); CHEN, Shuanglong, Shenzhen, Guangdong 518129 (CN); PANG, Donglei, Shenzhen, Guangdong 518129 (CN); DONG, Jie, Shenzhen, Guangdong 518129 (CN)
(74) Representative: Isarpatent
(86) International application number: PCT/CN2023/125931
(87) International publication number: WO 2024/093698

(57) **Abstract**

A communication method, a communication apparatus, and a computer-readable storage medium are disclosed, to reduce overheads of data synchronization between an RPKI server and a network device. The method includes: The network device sends, to the RPKI server, a data request message carrying an identifier of a first data type. The RPKI server sends, based on the identifier of the first data type in the data request message, data corresponding to the first data type to the network device, where the RPKI server stores data of multiple data types, and the first data type is at least one of the multiple data types. The network device receives the data that is corresponding to the first data type and sent by the RPKI server.

## Description

This application claims priority to Chinese Patent Application No. 202211347850.X, filed with the China National Intellectual Property Administration on October 31, 2022 and entitled "COMMUNICATION METHOD, COMMUNICATION APPARATUS, AND COMPUTER-READABLE STORAGE MEDIUM", which is incorporated herein by reference in its entirety.

### TECHNICAL FIELD

This application relates to the field of communication technologies, and in particular, to a communication method, a communication apparatus, and a computer-readable storage medium.

### BACKGROUND

To ensure security of a border gateway protocol (border gateway protocol, BGP)-based route and prevent security problems such as origin hijacking, path hijacking, and route leakage, a resource public key infrastructure (resource public key infrastructure, RPKI) mechanism is currently introduced based on the BGP protocol. Information needed for validation is delivered to a routing device by using the RPKI mechanism, and then the routing device performs validity verification on BGP routing information by using the RPKI mechanism. Currently proposed validation manners include route origin authorization (route origin authorization, ROA), border gateway protocol security (border gateway protocol security, BGPSec), autonomous system provider authorization (autonomous system provider authorization, ASPA), and the like.

The ROA is used as an example to describe the RPKI mechanism. An RPKI cache server (RPKI Cache Server) is responsible for periodically and synchronously downloading a resource certificate and an ROA signature from an RPKI database, verifying validity of the resource certificate and the ROA signature to obtain a real authorization relationship between an IP prefix and an AS number, and generating an ROA database. A router establishes an RPKI-router protocol session to the RPKI cache server through the RPKI-to-router (resource public key infrastructure to router, RTR or RPKI-Router) protocol. The router receives RPKI ROA data from the RPKI cache server through the session and uses the RPKI ROA data to determine authenticity of a BGP routing message received by the router from the outside, that is, validate whether an origin AS in the routing message has valid authorization to advertise the IP prefix.

A current RPKI-router protocol session mechanism has problems such as inflexible data synchronization, high overheads, and low efficiency.

### SUMMARY

This application provides a communication method, a communication apparatus, and a computer-readable storage medium, to reduce overheads of data synchronization between an RPKI server and a network device.

According to a first aspect, a communication method is provided. The method is applied to a network device, and the network device may be a router, a layer 3 switch, a multi-layer switch, or the like. The method includes: sending a data request message to an RPKI server. The data request message includes an identifier of a first data type, the first data type is a data type needed by the network device, and the data request message is used to request the RPKI server to send data corresponding to the first data type. The RPKI server stores data of multiple data types. The first data type is one or more of the multiple data types. The network device receives the data that is corresponding to the first data type and sent by the RPKI server. Therefore, the network device may request data of a specific data type from the RPKI server, and the RPKI server sends the data of the specific data type based on the specific data type in the data request message without sending data of all data types, to reduce data synchronization overheads.

In a possible implementation, the data request message is a data subscription message, and the data subscription message is used to request the RPKI server to send all data corresponding to the first data type. The data request message may include subscription to, from the RPKI server, a data type needed by the network device, so that the network device and the RPKI server can send, update, notify, and the like data based on the data type subscribed to by the network device, to reduce unnecessary data synchronization overheads and overheads of storage resources of the network device.

In a possible implementation, the data subscription message is further used to request the RPKI server to send, when data stored in the RPKI server is updated, an update notification and updated data that are corresponding to only the first data type to the network device, and the RPKI server does not send, to the network device, a data type that is not subscribed to by the network device. The RPKI server performs maintenance based on the data type subscribed to by the network device, so that network bandwidth overheads of data synchronization and overheads of storage resources of the network device can be reduced.

In a possible implementation, the data request message is a specific data reset query message, and the specific data reset query message is used to request the RPKI server to send all data corresponding to the first data type. Therefore, the network device may request data of a specific data type from the RPKI server, and the RPKI server sends the data of the specific data type based on the specific data type in the data request message without sending data of all data types, to reduce data synchronization overheads.

In a possible implementation, the data request message is a specific data serial number query message, and the specific data serial number query message is used to request the RPKI server to send updated data corresponding to the first data type. Therefore, the network device may request updated data of a specific data type from the RPKI server, and the RPKI server sends the updated data of the specific data type based on the specific data type in the data request message without sending updated data of all data types, to reduce data synchronization overheads.

In a possible implementation, after the sending a data request message to an RPKI server, the method further includes: The network device sends a data unsubscription message to the RPKI server. The data unsubscription message includes an identifier of a second data type, the data unsubscription message is used to request the RPKI server not to send data corresponding to the second data type, that is, the data of the second data type is data that is not needed by the network device temporarily, and the second data type is at least one data type in the first data type. Therefore, when the data type needed by the network device changes, the network device can flexibly and dynamically negotiate with the RPKI server to adjust the subscribed data type, and the RPKI server subsequently performs maintenance based on a modified data type, to improve flexibility of data synchronization.

In a possible implementation, the multiple data types include at least two of an internet protocol version 4 (Internet protocol version 4, IPv4) prefix (prefix), an internet protocol version 6 (Internet protocol version 6, IPv6) prefix, autonomous system provider authorization, and a router public key.

According to a second aspect, a communication method is provided. The method is applied to an RPKI server, and includes: receiving a data request message sent by a network device, where the data request message includes an identifier of a first data type, the RPKI server stores data of multiple data types, and the first data type is at least one of the multiple data types; and sending data corresponding to the first data type to the network device. Therefore, the RPKI server sends data of a specific data type based on the specific data type in the data request message, and does not need to send data of all data types, to reduce data synchronization overheads and relieve pressure of sending data by the RPKI server.

In a possible implementation, the data request message is a data subscription message, and the sending data corresponding to the first data type to the network device includes: sending all data corresponding to the first data type to the network device. The data of the specific data type is sent to the network device based on a type of the data request message and the specific data type (the first data type) in the data request message, to reduce unnecessary data synchronization overheads and overheads of storage resources of the network device.

In a possible implementation, after the RPKI server sends all data corresponding to the first data type to the network device, the method further includes: The RPKI server sends updated data corresponding to the first data type to the network device.

In a possible implementation, the data request message is a specific data reset query message, and the sending data corresponding to the first data type to the network device includes: sending all data corresponding to the first data type to the network device.

In a possible implementation, the data request message is a specific data serial number query message, and the sending data corresponding to the first data type to the network device includes: sending updated data corresponding to the first data type to the network device.

In a possible implementation, the method further includes: receiving a data unsubscription message sent by the network device, where the data unsubscription message includes an identifier of a second data type, and the second data type is at least one data type in the first data type. When the network device requests data from the RPKI server, data corresponding to a third data type is sent to the network device, where the third data type is a data type other than the second data type in the first data type. Therefore, when a data type needed by the network device changes, the network device can flexibly and dynamically negotiate with the RPKI server to adjust a subscribed data type, and the RPKI server subsequently performs maintenance based on a modified data type, to improve flexibility of data synchronization.

In a possible implementation, the method further includes: sending a specific data notification message to the network device, where the specific data notification message includes the identifier of the first data type, and the specific data notification message is used to notify the network device that the data corresponding to the first data type is updated, or notify the network device that the RPKI server has acknowledged the data request message, or notify the network device that the RPKI server is unable to respond to the data request message.

In a possible implementation, the multiple data types include at least two of an IPv4 prefix, an IPv6 prefix, autonomous system provider authorization, and a router public key.

According to a third aspect, a communication method is provided. The method is applied to an RPKI server and includes: after completing sending of data corresponding to a fourth data type to a network device, sending a specific data sending end message to the network device, where the specific data sending end message includes an identifier of the fourth data type, the specific data sending end message is used to notify the network device that sending of the data of the fourth data type is completed, and the fourth data type is one of multiple data types requested by the network device. To be specific, each data type has a corresponding data sending end message. When receiving a data sending end message corresponding to a data type, the network device may perform route validation by using data corresponding to the data type, so that a convergence speed of data of each data type can be accelerated.

According to a fourth aspect, a communication method is provided. The method is applied to a network device and includes: receiving data corresponding to a fourth data type sent by an RPKI server, where the fourth data type is one of multiple data types requested by the network device; receiving a specific data sending end message sent by the RPKI server, where the specific data sending end message includes an identifier of the fourth data type, and the specific data sending end message is used to notify the network device that sending of the data of the fourth data type is completed; and in response to the specific data sending end message, performing route validation based on the data corresponding to the fourth data type. To be specific, each data type has a corresponding data sending end message. When receiving a data sending end message corresponding to a data type, the network device may perform route validation by using data corresponding to the data type, so that a convergence speed of data of each data type can be accelerated.

According to a fifth aspect, a communication apparatus is provided. The apparatus includes a transceiver module. The transceiver module is configured to send a data request message to an RPKI server, where the data request message includes an identifier of a first data type, the data request message is used to request the RPKI server to send data corresponding to the first data type, the RPKI server stores data of multiple data types, and the first data type is at least one of the multiple data types. The transceiver module is configured to receive the data that is corresponding to the first data type and sent by the RPKI server.

In a possible implementation, the data request message is a data subscription message, and the data subscription message is used to request the RPKI server to send all data corresponding to the first data type.

In a possible implementation, the data subscription message is further used to request the RPKI server to send, when data stored in the RPKI server is subsequently updated, an update notification and updated data that are corresponding to only the first data type to the network device.

In a possible implementation, the data request message is a specific data reset query message, and the specific data reset query message is used to request the RPKI server to send all data corresponding to the first data type.

In a possible implementation, the data request message is a specific data serial number query message, and the specific data serial number query message is used to request the RPKI server to send updated data corresponding to the first data type.

In a possible implementation, the transceiver module is configured to send a data unsubscription message to the RPKI server, where the data unsubscription message includes an identifier of a second data type, the data unsubscription message is used to request the RPKI server not to send data corresponding to the second data type, and the second data type is at least one data type in the first data type.

In a possible implementation, the multiple data types include at least two of an internet protocol version 4 IPv4 prefix, an internet protocol version 6 IPv6 prefix, autonomous system provider authorization, and a router public key.

According to a sixth aspect, a communication apparatus is provided. The apparatus includes a transceiver module. The transceiver module is configured to receive a data request message sent by a network device, where the data request message includes an identifier of a first data type, the RPKI server stores data of multiple data types, and the first data type is at least one of the multiple data types. The transceiver module is configured to send data corresponding to the first data type to the network device.

In a possible implementation, the data request message is a data subscription message. The transceiver module is configured to send all data corresponding to the first data type to the network device.

In a possible implementation, the transceiver module is configured to send updated data corresponding to the first data type to the network device.

In a possible implementation, the data request message is a specific data reset query message, and the transceiver module is configured to send all data corresponding to the first data type to the network device.

In a possible implementation, the data request message is a specific data serial number query message, and the transceiver module is configured to send updated data corresponding to the first data type to the network device.

In a possible implementation, the transceiver module is configured to receive a data unsubscription message sent by the network device, where the data unsubscription message includes an identifier of a second data type, and the second data type is at least one data type in the first data type. The transceiver module is configured to: when the network device requests data from the RPKI server, send data corresponding to a third data type to the network device, where the third data type is a data type other than the second data type in the first data type.

In a possible implementation, the transceiver module is configured to send a specific data notification message to the network device, where the specific data notification message includes the identifier of the first data type, and the specific data notification message is used to notify the network device that the data corresponding to the first data type is updated, or notify the network device that the RPKI server has acknowledged the data request message, or notify the network device that the RPKI server is unable to respond to the data request message.

In a possible implementation, the multiple data types include at least two of an IPv4 prefix, an IPv6 prefix, autonomous system provider authorization, and a router public key.

According to a seventh aspect, a communication apparatus is provided. The apparatus includes a transceiver module. The transceiver module is configured to: after completing sending of data corresponding to a fourth data type to a network device, send a specific data sending end message to the network device, where the specific data sending end message includes an identifier of the fourth data type, the specific data sending end message is used to notify the network device that sending of the data of the fourth data type is completed, and the fourth data type is one of multiple data types requested by the network device.

According to an eighth aspect, a communication apparatus is provided. The apparatus includes a transceiver module and a processing module. The transceiver module is configured to receive data that is corresponding to a fourth data type and sent by an RPKI server, where the fourth data type is one of multiple data types requested by the network device. The transceiver module is configured to receive a specific data sending end message sent by the RPKI server, where the specific data sending end message includes an identifier of the fourth data type, and the specific data sending end message is used to notify the network device that sending of the data of the fourth data type is completed. The processing module is configured to perform route validation based on the data corresponding to the fourth data type.

According to a ninth aspect, a communication apparatus is provided. The apparatus includes a processor and a communication interface. The communication interface is configured to communicate with another communication apparatus. The processor is configured to run a group of instructions to implement the communication method in any one of the first aspect or the possible implementations of the first aspect, any one of the second aspect or the possible implementations of the second aspect, the third aspect, or the fourth aspect.

According to a tenth aspect, a computer-readable storage medium is provided. The computer-readable storage medium includes instructions. When the computer-readable storage medium runs on a computer, the computer is enabled to implement the steps of the communication method in any one of the first aspect or the possible implementations of the first aspect, any one of the second aspect or the possible implementations of the second aspect, the third aspect, or the fourth aspect.

### BRIEF DESCRIPTION OF DRAWINGS

FIG. 1 is a diagram of interaction between an RPKI server and a router in an RPKI mechanism according to this application;
FIG. 2 is a schematic flowchart of interaction between an RPKI server and a router according to this application;
FIG. 3 is a diagram of a structure of a communication system according to this application;
FIG. 4 is a schematic flowchart of an embodiment of a communication method according to this application;
FIG. 5 is a diagram of a data subscription PDU format according to this application;
FIG. 6 is another schematic flowchart of interaction between an RPKI server and a router according to this application;
FIG. 7 is a diagram of a data unsubscription PDU format according to this application;
FIG. 8 is a diagram of a format of a specific data sending end PDU according to this application;
FIG. 9 is a diagram of another format of a specific data sending end PDU according to this application;
FIG. 10 is another schematic flowchart of interaction between an RPKI server and a router according to this application;
FIG. 11 is a diagram of a format of a specific data serial number query PDU according to this application;
FIG. 12 is another schematic flowchart of interaction between an RPKI server and a router according to this application;
FIG. 13 is a diagram of a structure of a communication apparatus according to this application;
FIG. 14 is a diagram of a structure of another communication apparatus according to this application; and
FIG. 15 is a diagram of a structure of another communication apparatus according to this application.

### DESCRIPTION OF EMBODIMENTS

This application provides a communication method, a communication apparatus, and a computer-readable storage medium, to reduce overheads of data synchronization between an RPKI server and a network device.

Currently, an internet (Internet) infrastructure mainly includes a BGP-based inter-domain routing system, a domain name system (domain name system, DNS), and a public key infrastructure (public key infrastructure, PKI).

Almost all internet services rely on the infrastructure to ensure network connectivity, service availability, and service trustworthiness. The current infrastructure lacks a solid security and trustworthiness foundation and faces many security threats. BGP is initially designed without considering any security and trustworthiness factor and naturally lacks a security capability. BGP route-based security attacks such as origin hijacking, path hijacking, and route leakage frequently occur, affecting network security and stability.

Specifically, BGP is initially designed based on a principle of mutual trust between autonomous systems (autonomous system, AS). An AS unconditionally trusts a route advertisement received from another AS, and does not validate authenticity. If an AS declares a route advertisement that does not belong to an IP address prefix of the AS, after sending the route advertisement to a connected AS, the AS does not validate whether the route advertisement is authentic, but trusts the route advertisement, modifies route reachability information of the AS based on content in the route advertisement, and performs flooding. As a result, false routing information is propagated, and a large amount of route reachability information from ASs to the IP prefix is invalid. Hosts in these ASs cannot access the IP prefix, causing a network fault and affecting network security.

Currently, the BGP protocol does not have a security validation mechanism for route learning. A current mainstream solution in the industry is to introduce an RPKI mechanism based on the BGP protocol, where information needed for validation is delivered to a network device by using the RPKI mechanism, and then the network device performs validity verification on BGP routing information by using the RPKI mechanism. Currently proposed validation manners include ROA, BGPSec, ASPA, and the like.

The following uses RPKI ROA as an example to describe a complete running process of the RPKI mechanism.

To resolve a problem of BGP route hijacking, the industry proposes a solution in which validity of a BGP route origin AS or a route advertiser is validated to ensure BGP security. This is an RPKI-based route origin authorization (ROA) validation solution.

An RPKI cache server (RPKI cache server) is responsible for periodically and synchronously downloading a resource certificate and an ROA signature from an RPKI database, verifying validity of the resource certificate and the ROA signature to obtain a real authorization relationship between an IP prefix and an AS number, and generating an ROA database. A router obtains ROA data from the RPKI cache server according to the RTR protocol and uses the ROA data to determine authenticity of a BGP routing message received by the router from the outside, that is, validate whether an origin AS in the routing message has valid authorization to advertise the IP prefix.

The RPKI cache server may also be referred to as an RPKI server, an RPKI relying party (relying party, RP), or a cache server (cache server) for short.

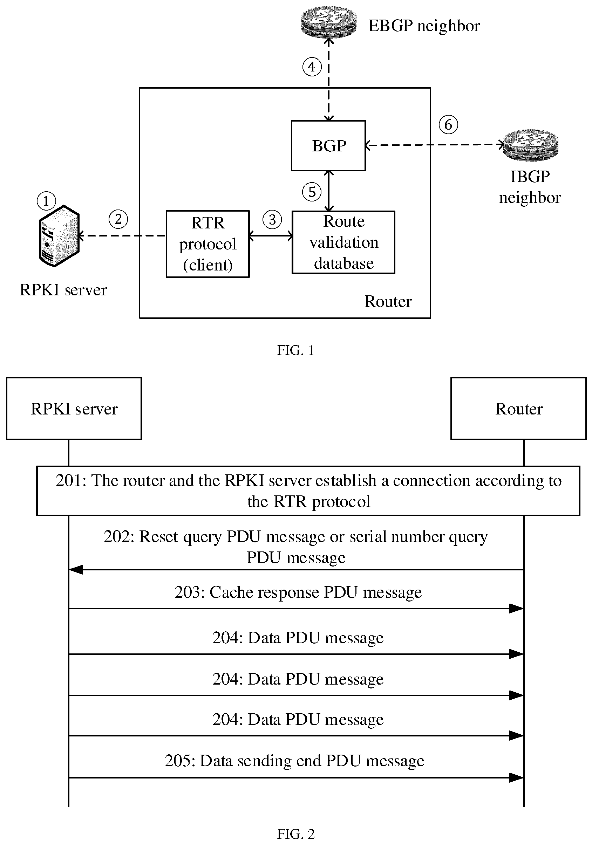

FIG. 1 shows a basic interaction procedure of the RPKI mechanism.
① The RPKI server generates and maintains an RPKI ROA database.
② The router (router) establishes an RPKI-to-router protocol session to the RPKI server. The router receives ROA data from the RPKI server through the session.
③ The router locally constructs a route validation database based on the received ROA data.
④ The router receives a BGP route update from an external BGP (external BGP, EBGP) neighbor.
⑤ Before the BGP route update is added to a BGP routing table, correctness of an origin autonomous system (Origin AS) number of the BGP route update is validated first, and a route attribute is adjusted based on a validation result to affect a BGP route selection result. This process is usually referred to as a BGP prefix origin validation (BGP prefix origin validation) process.
⑥ The router advertises an optimal route and the validation result to an internal border gateway protocol (internal border gateway protocol, IBGP) neighbor through a BGP route based on a BGP extended community attribute.

In step ② in FIG. 1, the router interacts with the RPKI server to obtain validation data for validation from the RPKI server. As shown in FIG. 2, currently, a specific process of exchanging an RTR protocol packet between the RPKI server and the router is as follows:
201: The router (Router) and the RPKI server establish a connection according to the RTR protocol.
202: When the router needs to apply to the RPKI server for data (requests data), the router sends a reset query (reset query) protocol data unit (protocol data units, PDU) message or a serial number query (serial query) PDU message to the RPKI server. The reset query PDU message is used to request the RPKI server to advertise all validation data of the RPKI server. The serial query PDU message is used to request the RPKI server to advertise incrementally updated validation data of the RPKI server. Data types included in the validation data are an internet protocol version 4 (Internet protocol version 4, IPv4) prefix (prefix), an internet protocol version 6 (Internet protocol version 6, IPv6) prefix, ASPA, and a router public key (router key).
203: The RPKI server sends a cache response (cache response) PDU message to the router, indicating that the request of the router is acknowledged.
204: The RPKI server sends various types of payload protocol data units (payload PDU), that is, data PDU messages, for carrying the validation data, to the router. The data PDU messages include an IPv4 prefix PDU, an IPv6 prefix PDU, an ASPA PDU, and a router key PDU. The RPKI server sends all or updated validation data of all data types.
205: After completing sending of all data PDU messages, the RPKI server sends a data sending end protocol data unit (End of Data PDU) message to the router, to notify the router that sending of all data PDUs is completed.

After receiving the end of data PDU message, the router knows that the router has completed data synchronization with the RPKI server, and may use the received data to perform route validation.

Currently, PDU information included in the RTR protocol is shown in Table 1 (protocol version numbers 0 to 2, indicating that a corresponding protocol data unit type is supported in a version 0/1/2).

**Table 1 PDU information included in the RTR protocol**

| PDU type | Protocol version number | PDU name | Description |
|---|---|---|---|
| 0 | 0 to 2 | Serial number notification (Serial Notify) | An RPKI server notifies a router of a data update in a serial number manner |
| 1 | 0 to 2 | Serial query | The router requests an update from the RPKI server in the serial number manner |
| 2 | 0 to 2 | Reset query | The router requests the RPKI server to advertise all data |
| 3 | 0 to 2 | Cache response | The RPKI server responds to the reset query request and advertises all the data of the RPKI server |
| 4 | 0 to 2 | IPv4 prefix | IPv4 prefix ROA, which is a data PDU |
| 6 | 0 to 2 | IPv6 prefix | IPv6 prefix ROA, which is a data PDU |
| 7 | 0 to 2 | End of data | The RPKI server notifies the router that data sending is completed |
| 8 | 0 to 2 | Cache reset (Cache Reset) | The RPKI server notifies the router that the RPKI server cannot incrementally respond to a type1 serial query |
| 9 | 0 | Reserved (Reserved) | |
| 9 | 1 and 2 | Router key | Router public key, which is a data PDU |
| 10 | 0 to 2 | Error report (Error Report) | Error notification |
| 11 | 0 and 1 | Reserved | |
| 11 | 2 | ASPA | Autonomous system provider authorization, which is a data PDU |
| 255 | 0 to 2 | Reserved | |

Currently, in the RTR protocol, the RPKI server maintains a common serial number (serial number) for all data PDUs, and there is only one end of data PDU. When synchronizing cached data to the router, the RPKI server promiscuously sends various data PDU messages such as the IPv4 prefix, the IPv6 prefix, the ASPA, and the router key together. The router cannot select one or more types of PDUs, or cannot reject a type of PDU that does not need to be received. Such a data synchronization manner brings some problems.
1. For a data PDU that is not needed or supported by the router, the RPKI server still sends all types of data PDUs, causing unnecessary overheads. For example, the router does not support the ASPA, but still receives ASPA PDU information. Alternatively, the router currently needs only the IPv4 prefix PDU and the IPv6 prefix PDU, and does not need the ASPA PDU and the router key PDU. However, the cache server cannot meet a requirement of the router, and delivers all data PDUs to the router.
2. When the router needs to update a type of data PDU, the router sends a reset or serial query to the cache server. In this case, the RPKI server indiscriminately sends all types of data PDUs to the router, causing unnecessary data synchronization overheads.
3. When a service of a router changes, the RPKI server and the router cannot dynamically negotiate a type of data to be synchronized, causing poor flexibility.
4. After data PDU messages are promiscuously sent, an end of data PDU message is used to notify the router that sending of all data is completed. The router can use the data for route validation only after all types of data PDU messages are received, causing low synchronization efficiency.

To resolve the foregoing technical problem, this application provides the following real-time solution, so that a network device and an RPKI server can flexibly and dynamically maintain needed validation data, to reduce unnecessary overheads and improve validation data synchronization efficiency.

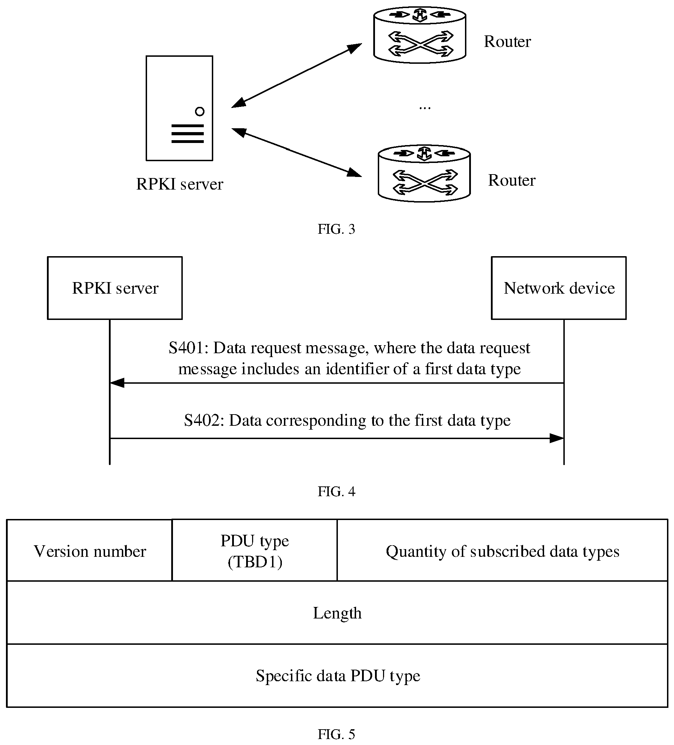

FIG. 3 is a diagram of a structure of a communication system according to this application. In this embodiment, the communication system includes an RPKI server and at least one network device. The network device may be a device such as a router, a layer 3 switch, or a higher layer switch. The RPKI server caches various types of data used to validate routing information. The network device is connected to the RPKI server and obtains data of a needed data type from the RPKI server.

Based on the foregoing communication system, this application provides the following method embodiments. In the method embodiment, an RPKI server and one network device are used as an example for description. FIG. 4 is a schematic flowchart of an embodiment of a communication method according to this application. This embodiment includes the following steps.

S401: A network device sends a data request message to an RPKI server, where the data request message includes an identifier of a first data type.

When the network device needs all data or updated data of one or more data types, the network device sends a data request message to the RPKI server. The data request message carries an identifier of a needed data type (represented by the first data type in this embodiment), to request the RPKI server to send data corresponding to the first data type. The RPKI server caches data of multiple data types, and the first data type is at least one of the multiple data types. The data type of the data cached by the RPKI server includes, for example, an IPv4 prefix (IPv4 prefix ROA), an IPv6 prefix (IPv6 prefix ROA), a router public key, and ASPA. It may be understood that the IPv4 prefix, the IPv6 prefix, the router public key, and the ASPA are four data types supported in a current protocol. If another data type is newly added to a future protocol, the another data type can also be applied to this solution.

The data request message may be a data subscription (subscribe data) message, a specific data reset query (specific data reset query) message, a specific data serial number query (specific data serial query) message, or the like.

The data subscription message is used to request the RPKI server to send all data corresponding to the first data type to the network device. The specific data reset query message is used to request the RPKI server to send all data corresponding to the first data type to the network device. The specific data serial number query message is used to request the RPKI server to send updated data corresponding to the first data type to the network device, to maintain data corresponding to a specific data type.

S402: The RPKI server sends the data corresponding to the first data type to the network device based on the identifier of the first data type in the data request message.

The RPKI server obtains the identifier of the first data type in the data request message, determines that the network device needs the data of the first data type, and sends the data of the first data type to the network device.

The data request message further includes, for example, a message identifier (a value in a PDU type field) identifying a data type, and updated data or all data is sent to the network device based on the message identifier. For example, when the message identifier indicates that the data request message is the data subscription message, the RPKI server sends all the data of the first data type to the network device. When the message identifier indicates that the data request message is the specific data reset query message, the RPKI server sends all the data of the first data type to the network device.

When the message identifier indicates that the data request message is the specific data serial number query message, the RPKI server sends the updated data of the first data type to the network device. For example, the serial number query message further carries a serial number (serial number), to indicate the RPKI server to send newly added data and to-be-deleted data corresponding to the serial number, that is, updated data. The serial number is a logical version number of the data cached by the RPKI server. After the RPKI server successfully downloads the newly added or to-be-deleted data from an RPKI database, a value of the serial number changes. Therefore, the RPKI server can send the updated data of the first data type to the network device based on the serial number and the identifier of the first data type in the specific data serial number query message.

In this embodiment, the data subscription message and the specific data reset query message are different implementations of subscribing to a specific data type. Compared with the current RTR protocol, the data subscription message is a newly added message, and various original messages (messages corresponding to various types of PDUs in Table 1) in the RTR protocol are not modified. After creating a session with the RPKI server, the network device may subscribe to the data of the first data type from the RPKI server by using the data subscription message. In a subsequent procedure, for example, the RPKI server sends a data PDU message, and for various types of sent notification messages, for example, a serial number notification (Serial Notify) message, a cache (that is, the RPKI server) response (Cache Response) message, and a cache reset (Cache Reset) message, and a serial number query (Serial Query) message and the like that is sent by the network device and that is used to request to updated data, all messages process content related to the first data type, and no explicit description is needed. To be specific, after the network device sends the data subscription message to the RPKI server, in a subsequent interaction process, various PDUs in Table 1 are still used, and the PDU message does not need to carry the identifier of the first data type. However, both the data requested by the network device and the data sent by the RPKI server are the data of the first data type. The serial number notification message is also referred to as an update notification message in this application.

A PDU of the specific data reset query message is obtained by modifying the reset query PDU in Table 1, and has a function similar to a function of the reset query message, and both can be used by the network device to request all data from the RPKI server after a new session is created between the network device and the RPKI server. A difference lies in that the specific data reset query message carries the identifier of the first data type and can indicate the RPKI server to send all the data of only the first data type. When receiving the reset query message, the RPKI server sends all data of all data types to the network device. In a subsequent procedure, for example, various types of notification messages sent by the RPKI server may carry the identifier of the first data type, and the notification message carrying the identifier of the first data type may be referred to as, for example, a specific data notification message, for example, including at least one of a specific data serial number query (Specific Data Serial Notify) message, a specific data cache response (Specific Data Cache Response) message, a specific data cache reset (Specific Data Cache Reset) message, and the like, to indicate a response or a notification of the RPKI server to a specific data type subscribed to by the network device. The specific data serial notify message may be used by the RPKI server to notify the network device that the data of the first data type to which the network device subscribes is updated. The specific data cache response message may be used by the RPKI server to notify the network device that the specific data reset query message or the specific data serial number query message of the network device is acknowledged.

A PDU of the specific data serial number query message is obtained by modifying the serial number query PDU in Table 1, and has a function similar to a function of the serial number query message, and both can be used to request updated data from the RPKI server, to maintain data stored in the network device. A difference lies in that the specific data serial number query message carries the identifier of the first data type and can indicate the RPKI server to send the updated data of only the first data type. After receiving the serial number query message, the RPKI server sends updated data of all the data types to the network device.

The specific data serial number query message may be used to update data of all or a part of data types in the data types subscribed to by the network device. Therefore, data of a specific data type can be maintained based on a requirement, and higher flexibility is provided.

When a service of the network device is adjusted, a needed data type may change. For example, one or more data types are no longer needed, or a data type needs to be added. When a requirement for the data type changes, the network device may dynamically negotiate and adjust a subscribed data type with the RPKI server in the following implementations.

In an implementation, the network device may resend, to the RPKI server, a data subscription message that carries an identifier of a data type of a new requirement, to overwrite a previously subscribed data type, thereby implementing switching of the subscribed data type.

In another implementation, if the network device needs to reduce one or more data types from the previously subscribed data types, the network device may send an unsubscription message to the RPKI server, where the unsubscription message carries an identifier of an unsubscribed second data type, to indicate the RPKI server not to synchronize data of the second data type.

After receiving the unsubscription message, the RPKI server modifies the data type subscribed to by the network device to a third data type. The third data type is a data type other than the second data type in the first data type subscribed to by the network device. In a subsequent procedure, interaction between the RPKI server and the network device is based on the third data type. For example, when the network device subsequently requests data from the RPKI server, the RPKI server sends data of only the third data type to the network device. When the data of the third data type in the RPKI server is updated, the RPKI server may notify, by using a specific serial number notification message, the network device that the data of the third data type is updated, and no longer notify the network device that the data of the second data type is updated.

After sending data to the network device, the RPKI server sends an end of data PDU message. No matter how many types of data are sent, only one end of data PDU message is used to notify the network device that sending of all data is completed. The network device uses the received data to validate routing information only after receiving the end of data PDU message. As a result, a convergence speed of each data type is slow.

In this embodiment, specific data sending end (End of Specific Data) PDUs of respective types are added for various PDUs such as the IPv4 prefix, the IPv6 prefix, the ASPA and the router key, to carry a specific data sending end message, so that the network device can be separately notified that synchronization of PDU data of a specific type is completed. The specific data sending end message may be used in a process in which the RPKI server responds to the data request message and sends the data PDU message to the network device after the RPKI server receives the data request message such as the reset query message, the serial number query message, the data subscription message, the specific data serial number query message, or the specific data reset query message from the network device.

The RPKI server successively sends data of each data type in a centralized manner, and sends an end of specific data PDU corresponding to the data type to the network device after sending of the data of the data type is completed each time, to notify the network device that sending of the data of the data type is completed. In this way, the network device can learn in time that transmission of the obtained data of the data type is completed, and the network device can perform route validation by using the data of the data type in time, without waiting for completion of receiving all data of all data types and then using the obtained data for route validation, which is equivalent to improving data synchronization efficiency, so that convergence of data of each data type can be accelerated.

In this embodiment, a PDU exchanged between the network device and the RPKI server is added or modified, where the PDU carries an identifier of a data type needed by the network device, and the network device and the RPKI server identify the identifier of the data type in the PDU, to implement subscription, unsubscription, sending, update, or update notification of the data of the specific data type. Therefore, the network device and the RPKI server can flexibly and dynamically negotiate the needed data type, and the RPKI server can pertinently synchronize validation data of the data type needed by the network device. Therefore, data synchronization overheads are reduced, and data synchronization efficiency is improved.

The following describes PDU formats of the foregoing various messages and a specific interaction procedure between the network device and the RPKI server.

### 1. Data subscription (Subscribe Data) message and data unsubscription (Unsubscribe Data) message

A PDU of the data subscription message (referred to as a data subscription PDU below for short) may include a field indicating a subscribed data type, and the field carries an identifier of the to-be-subscribed data type. One data subscription PDU may carry identifiers of one or more data types. Optionally, the PDU of the data subscription message may further include a quantity of subscribed data types field, to indicate a quantity of subscribed data types this time.

FIG. 5 is a diagram of a format of a PDU of a data subscription message. It may be understood that various PDU formats provided in this application are merely used as examples, and should not be construed as a limitation on this application. Another field may be further added to a PDU format, or a field in the PDU format may be deleted or modified, and a name of each PDU, a length of a field in the PDU, and a relative position of the field may also change, provided that subscription, unsubscription, notification, update, and the like of a specific data type can be implemented.

In FIG. 5, the data subscription PDU may include fields such as a protocol version (Protocol Version), a PDU type (PDU Type), a quantity of subscribed data types (Number of Subscribe Data PDU Type), a length (Length), and a specific data PDU type (Specific Data PDU Type). A value in the PDU type indicates that the PDU is the data subscription PDU, and may be any unused value of a PDU type field. To distinguish between different PDU types, the PDU type is represented by to-be-defined (to be defined, TBD) 1 herein.

A value in the specific data PDU type is an identifier of a data type. A specific data PDU type field may carry identifiers of one or more data types, indicating that data of one or more data types is subscribed to. Different values in the specific data PDU type field indicate different data types. For example, if the value of the specific data PDU type field is 4, it indicates that the subscribed data type includes an IPv4 prefix; if the value of the specific data PDU type field is 6, it indicates that the subscribed data type includes an IPv6 prefix; if the value of the specific data PDU type field is 9, it indicates that the subscribed data type includes a router key; if the value of the specific data PDU type field is 11, it indicates that the subscribed data type includes ASPA. Certainly, other values may alternatively be used to represent the foregoing data types. This is not limited herein.

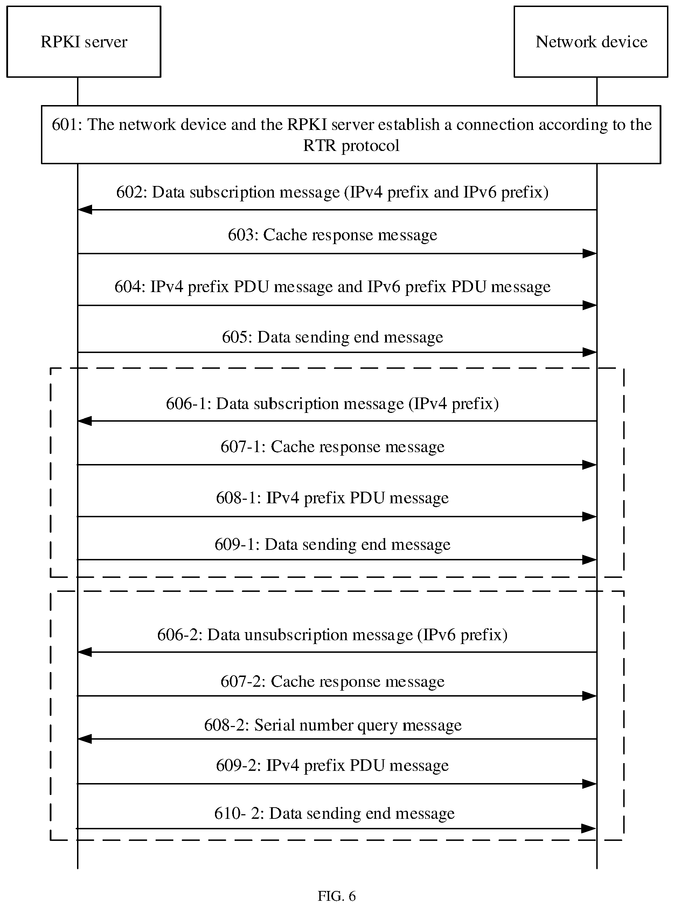

A data subscription processing procedure initiated by the network device is shown in FIG. 6. Specific implementation steps are as follows:
601: The network device and the RPKI server establish a connection according to the RTR protocol.
602: The network device sends a data subscription message to the RPKI server, where a needed data type specified in the data subscription message is one or more of multiple data types. In FIG. 6, two data types: an IPv4 prefix and an IPv6 prefix are specified as an example. A value of a specific data PDU type field in a PDU of the subscription message is identifiers of the IPv4 prefix and the IPv6 prefix. It may be understood that the data type specified in FIG. 6 is merely used as an example, and the data type specified in the data subscription message may be any one or more other needed data types. This is not limited herein.
603: After receiving the data subscription message sent by the network device, the RPKI server sends a cache response (Cache Response) message to the network device, indicating that the request of the network device is acknowledged.
604: The RPKI server sends data PDU (IPv4 prefix PDU and IPv6 prefix PDU) messages of only the two data types: the IPv4 prefix and the IPv6 prefix to the network device based on an indication of the data type in the data subscription message received from the network device, and does not send data PDU messages of other data types, such as ASPA and a router key, to the network device.
605: After completing sending of the data PDU messages of the data types needed by the network device, the RPKI server sends a data sending end (End of Data) message to the network device, to notify the network device that sending of the data PDU messages of the data types needed by the network device is completed.

After receiving the data sending end (End of Data) message, the network device knows that the data of the data type subscribed to by the network device has been synchronized with the RPKI server.

The network device may subscribe to one or more needed specific data types from the RPKI server, and the RPKI server sends data of the specific data type to the network device based on the subscribed data type. Therefore, data synchronization overheads can be reduced, unnecessary data sending and receiving can be avoided, and data synchronization efficiency can be improved.

If a service is adjusted and the needed data type changes after the network device runs for a period of time, the subscribed data type may be adjusted in the following two manners. A first manner of adjusting the subscribed data type is that the network device modifies the subscribed data type by resending a data subscription message. For example, after step 605, the method may further include the following steps.

606-1: After the network device runs for a period of time, the service is adjusted, and the data PDU message of the data type: the IPv6 prefix is no longer needed. In this case, the network device sends a data subscription message to the RPKI server, where the data subscription PDU message specifies that a needed data information type is the IPv4 prefix, and no longer specifies the data type: the IPv6 prefix.

607-1: After receiving the data subscription message sent by the network device, the RPKI server sends a cache response (Cache Response) message to the network device, indicating that the request of the network device is acknowledged.

608-1: The RPKI server sends the data PDU message (IPv4 prefix PDU) of only the IPv4 prefix type to the network device based on an indication of the data type in the data subscription message received from the network device, and does not send other types of information, such as the IPv6 prefix, the ASPA, and the router key, to the network device.

609-1: After completing sending of the data PDU message of the data type needed by the network device, the RPKI server sends a data sending end (End of Data) message to the network device, to notify the network device that sending of the data PDU message of the data type needed by the network device is completed.

After receiving the data sending end message, the network device knows that the data of the data type subscribed to by the network device has been synchronized with the RPKI server. In this case, the network device refreshes the received data of the IPv4 prefix type. Optionally, the network device may further delete the previously received IPv6 prefix data.

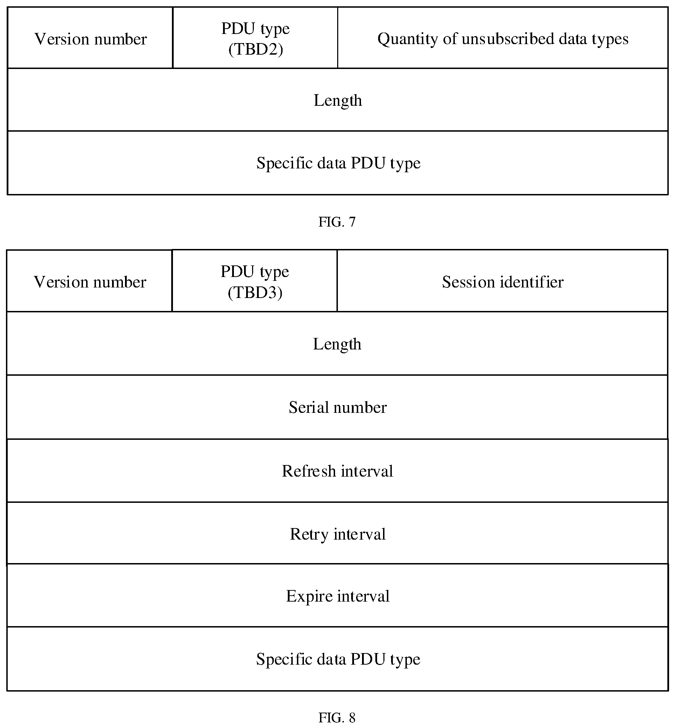

A second manner of adjusting the subscribed data type is that the network device modifies the subscribed data type by sending a data unsubscription message. Specifically, a PDU of the newly added data unsubscription message is referred to as a data unsubscription PDU (Unsubscribe Data PDU) for short below. FIG. 7 shows a format of a data unsubscription PDU. The data unsubscription PDU may include fields such as a protocol version (Protocol Version), a PDU type (PDU Type), a quantity of unsubscribed data types (Number of Unsubscribe Data PDU Type), a length (Length), and a specific data PDU type (Specific Data PDU Type). A value in the PDU type indicates that the PDU is the data unsubscription PDU, and may be any unused value of a PDU type field. To distinguish between different PDU types, the data unsubscription PDU is represented by TBD2 herein.

A value in a specific data PDU type field in a PDU of the unsubscription message is an identifier of a data type, indicating an unsubscribed data type, that is, indicating that data of the data type is no longer subscribed to. The specific data PDU type field may carry identifiers of one or more unsubscribed data types, that is, one or more data types may be unsubscribed from at a time. Different values in the specific data PDU type field indicate different data types. For example, if the value of the specific data PDU type field is 4, it indicates that the unsubscribed data type includes an IPv4 prefix; if the value of the specific data PDU type field is 6, it indicates that the unsubscribed data type includes an IPv6 prefix; if the value of the specific data PDU type field is 9, it indicates that the unsubscribed data type includes a router key; if the value of the specific data PDU type field is 11, it indicates that the unsubscribed data type includes ASPA. Certainly, other values may alternatively be used to represent the foregoing data types. This is not limited herein.

In this case, after step 605 in FIG. 6, the subscribed data type may be further adjusted by using the following steps.

606-2: After the network device runs for a period of time, a service is adjusted, and a data PDU message of the data type: the IPv6 prefix is no longer needed. In this case, the network device sends a data unsubscription message to the RPKI server, where the data unsubscription message specifies that a to-be-unsubscribed data type is the IPv6 prefix, that is, a value of a specific data PDU type field in a PDU of the unsubscription message is an identifier of the IPv6 prefix.

607-2: After receiving the data unsubscription message sent by the network device, the RPKI server sends a cache response (Cache Response) message to the network device, indicating that the request of the network device is acknowledged.

608-2: When the network device needs to request data from the RPKI server subsequently, the network device sends a data request message to the RPKI server. Herein, a serial number query message is used as an example.

609-2: When data of the data type: the IPv6 prefix on the RPKI server changes subsequently, the RPKI server does not send the data to the network device. When the network device requests data from the PRKI server, for example, after a serial number query message is received from the network device, only an IPv4 prefix PDU message is sent.

610-2: After completing sending of the data PDU message of the data type needed by the network device, the RPKI server sends a data sending end (End of Data) message to the network device, to notify the network device that sending of the data PDU message of the data type needed by the network device is completed.

Optionally, the network device may delete previously received IPv6 prefix data information to release storage space.

It may be understood that, in addition to a scenario in which the data request message is a data subscription message, the data unsubscription message may be further used in a scenario in which the data request message is a specific data reset query message or a reset query message. Implementation principles for data type unsubscription in different scenarios are the same, and therefore details are not described herein again.

Therefore, when the needed data type changes, the network device can dynamically negotiate with the RPKI server to modify the subscribed data type, so that data synchronization between the RPKI server and the network device is more flexible.

### 2. Specific data sending end (End of Specific Data) message

End of specific data PDUs corresponding to respective types are newly added for various data PDUs of various data types such as an IPv4 prefix, an IPv6 prefix, ASPA and a router key.

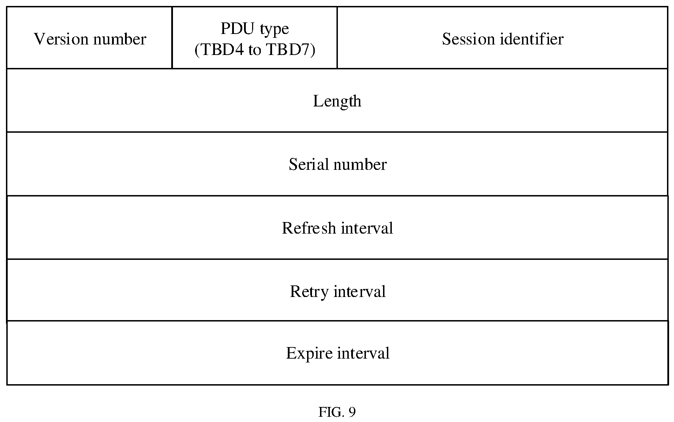

As shown in FIG. 8 and FIG. 9, FIG. 8 shows a format of an end of specific data PDU, and FIG. 9 shows another format of an end of specific data PDU. In FIG. 8, the end of specific data PDU may include fields such as a protocol version (Protocol Version), a PDU type (PDU Type), a session identifier (session ID), a length (Length), a serial number (Serial Number), a refresh interval (Refresh Interval), a retry interval (Retry Interval), an expire interval (Expire Interval), and a specific data PDU type (Specific Data PDU Type).

A value in a specific data PDU type field is an identifier of a data type, indicating a data type of data that has been sent by an RPKI server, and may be one of an IPv4 prefix, an IPv6 prefix, ASPA and a router key.

A value in the PDU type indicates that the PDU is a specific data sending end PDU, and may be any unused value of a PDU type field. To distinguish between different PDU types, the specific data sending PDU is represented by TBD3 herein. Different values in the specific data PDU type field indicate different data types. For example, if the value of the specific data PDU type field is 4, it indicates that the data type of the data that has been sent is the IPv4 prefix; if the value of the specific data PDU type field is 6, it indicates that the data type of the data that has been sent is the IPv6 prefix; if the value of the specific data PDU type field is 9, it indicates that the data type of the data that has been sent is the router key; if the value of the specific data PDU type field is 11, it indicates that the data type of the data that has been sent is the ASPA. Certainly, other values may alternatively be used to represent the foregoing data types. This is not limited herein. The end of specific data PDU may carry an identifier of one data type, that is, indicate, at a time, that sending of data of one data type is completed.

FIG. 9 shows another format of an end of specific data PDU. In addition to adding a specific data PDU type field to the end of specific data PDU to carry an identifier of a data type, a corresponding end of data PDU may be further newly added for data PDUs of various data types such as an IPv4 prefix, an IPv6 prefix, ASPA, and a router key. That is, each data type corresponds to one PDU, and there are multiple end of specific data PDUs. In this case, a value of a PDU type is the identifier of the data type. Different end of specific data PDUs are distinguished by values of the PDU type. Values TBD4 to TBD7 of the PDU type are separately defined in Table 2:

**Table 2 End of specific data PDU type**

| PDU type | Name | Description |
|---|---|---|
| TBD4 | End of IPv4 prefix data PDU | An RPKI server notifies a network device that sending of IPv4 prefix data is completed |
| TBD5 | End of IPv6 prefix data PDU | The RPKI server notifies the network device that sending of IPv6 prefix data is completed |
| TBD6 | End of router key data PDU | The RPKI server notifies the network device that sending of the router public key data is completed |
| TBD7 | End of ASPA data PDU | The RPKI server notifies the network device that sending of ASPA data is completed |

Functions implemented by formats of the end of specific data PDUs in FIG. 8 and FIG. 9 are equivalent. Two extension solutions are merely listed herein, and two of multiple extension examples that can implement a same function are merely provided.

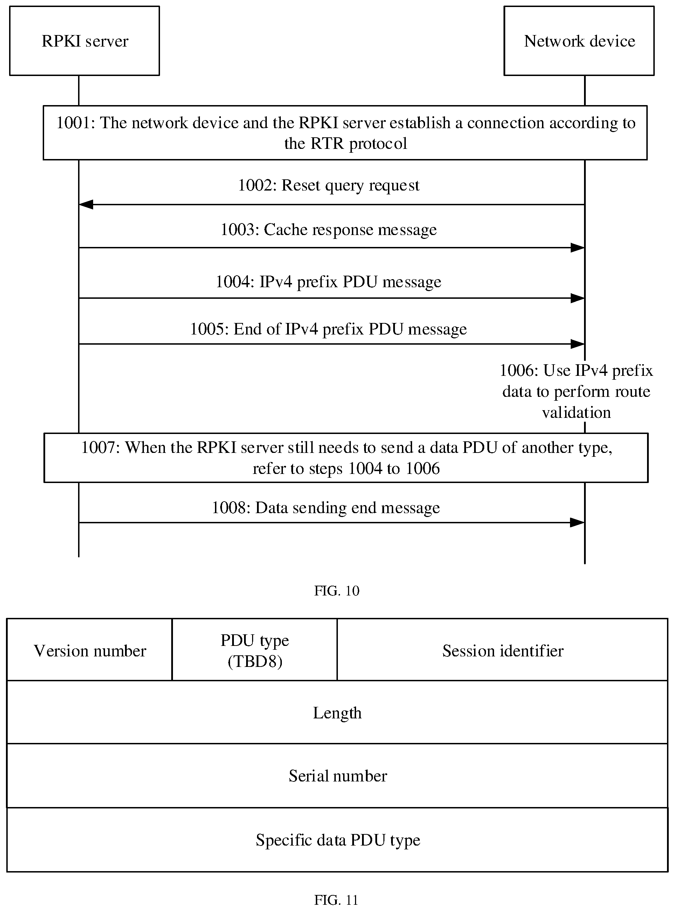

As shown in FIG. 10, after a newly added end of specific data PDU is used, a process of interaction between an RPKI server and a network device is as follows:
1001: The network device and the RPKI server establish a connection according to the RTR protocol.
1002: When the network device needs to apply to the RPKI server for data (requests data), the network device sends a reset query (Reset Query) message (which may alternatively be a data request message such as a data subscription message, a serial number query message, or a specific data serial number query message) to the RPKI server, and requests the RPKI server to advertise data of all data types (such as an IPv4 prefix, an IPv6 prefix, ASPA, and a router key) of the RPKI server.
1003: The RPKI server sends a cache response (Cache Response) message to the network device, indicating that the request of the network device is acknowledged.
1004: The RPKI server starts to send a data PDU message of a data type, for example, an IPv4 prefix PDU message.
1005: When sending of the IPv4 prefix PDU message is completed, the RPKI server sends an end of IPv4 prefix PDU message to the network device, to notify the network device that sending of all IPv4 prefix data is completed.
1006: The network device receives the end of IPv4 prefix PDU message, knows that the network device has completed IPv4 prefix data synchronization with the RPKI server, and can use the IPv4 prefix data to perform route validation.
1007: When the RPKI server still needs to send a data PDU of another type, refer to steps 1004 to 1006. For example, when sending of an IPv6 prefix PDU message is completed, the RPKI server sends an end of IPv6 prefix PDU message to the network device, to notify the network device that sending of all IPv6 prefix data is completed. When sending of a router key PDU message is completed, the RPKI server sends an end of router key PDU message to the network device, to notify the network device that sending of all router key data is completed. When sending of an ASPA PDU message is completed, the RPKI server sends an end of ASPA PDU message to the network device, to notify the network device that sending of all ASPA data is completed.
1008: When sending of all data PDU messages on the RPKI server is completed, the RPKI server sends a data sending end (End of Data) message to the network device, to notify the network device that sending of all the data PDU messages is completed.

After receiving the data sending end (End of Data) message, the network device knows that the network device has synchronized all data with the RPKI server.

Therefore, after sending of a data PDU message of a data type is completed each time, the RPKI server can include an identifier of the data type in an end of specific data message corresponding to the data type. A convergence speed of data of each data type in the network device is accelerated, so that the network device can use in time latest data obtained from the RPKI server to perform route validation.

### 3. Specific data serial query PDU and the like

RPKI object types may be added to PDUs such as serial notify, serial query, reset query, cache response, and cache reset (currently, RPKI data objects such as an IPv4 prefix, an IPv6 prefix, ASPA, and a router key are supported; if another data object is added in a future protocol update, this solution can also be extended to support more data objects).

As shown in FIG. 11, serial query PDU extension is used as an example. An extended serial query PDU is a PDU of a specific data serial number query message (referred to as a specific data serial number query PDU or a specific data serial query PDU for short below).

The specific data serial number query PDU may include a version number (Protocol Version), a PDU type (PDU Type), a session identifier (session ID), a length (Length), a serial number (Serial Number), and a specific data PDU type (Specific Data PDU Type) field. A value in the PDU type indicates that the PDU is the PDU of the specific data serial number query message, and may be any unused value of a PDU type field. To distinguish between different PDU types, the PDU type is represented by to-be-defined (to be defined, TBD) 8 herein.

A value in the specific data PDU type field is an identifier of a data type. Different values in the specific data PDU type indicate different data types. The specific data PDU type field may carry identifiers of one or more data types, that is, data of one or more data types may be requested to be updated at a time. For example, if the value of the specific data PDU type field is 4, it indicates that the type of the data requested to be updated includes an IPv4 prefix; if the value of the specific data PDU type field is 6, it indicates that the type of the data requested to be updated includes IPv6 prefix ROA; if the value of the specific data PDU type field is 9, it indicates that the type of the data requested to be updated includes an router key; if the value of the specific data PDU type field is 11, it indicates that the type of the data requested to be updated includes ASPA. Certainly, other values may alternatively be used to represent the foregoing data types. This is not limited herein.

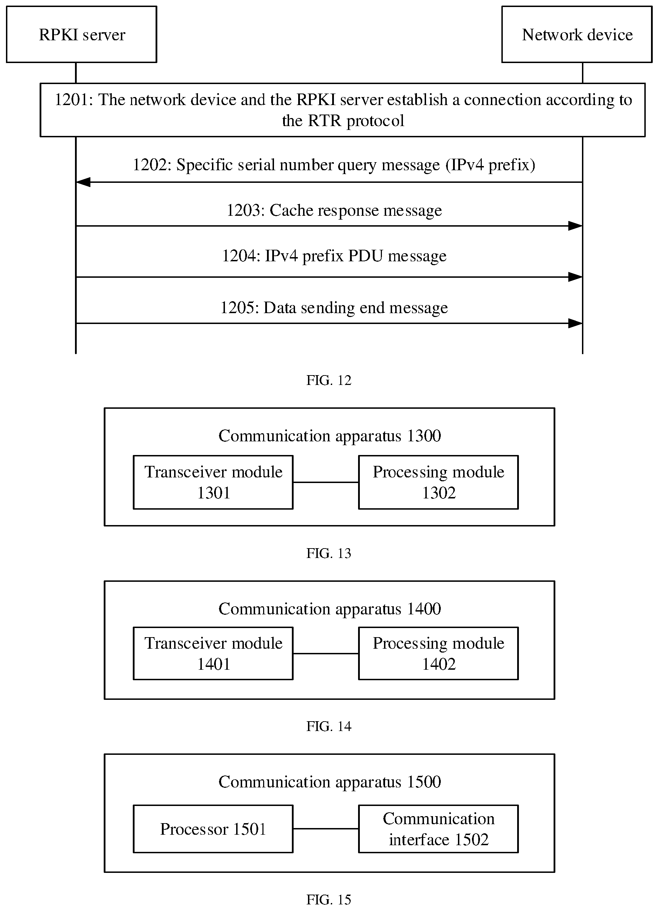

As shown in FIG. 12, an enhanced specific data serial query PDU may be used to request data of a data type based on a requirement. A specific implementation process is as follows:
1201: A network device and an RPKI server establish a connection according to the RTR protocol.
1202: When the network device needs to apply to the RPKI server for data (requests data), the network device sends a specific data serial number query (Specific Data Serial Query) message to the RPKI server, to request the RPKI server to advertise data of a data type specified in the message. For example, the data type of this request is an IPv4 prefix, that is, a value of a specific data PDU type field is an identifier of the IPv4 prefix.
1203: The RPKI server sends a cache response (Cache Response) message to the network device, indicating that the request of the network device is acknowledged.
1204: The RPKI server starts to send a data PDU message of the data type specified in the specific data serial number query message, for example, an IPv4 prefix PDU message specified in step 2.
1205: When sending of the IPv4 prefix PDU message is completed, the RPKI server sends a data sending end (End of Data) message to the network device, to notify the network device that sending of the requested data PDU is completed.

After receiving the data sending end (End of Data) message, the network device knows that the IPv4 prefix PDU data requested by the network device has been synchronized with the RPKI server.

Therefore, a PDU exchanged between the network device and the RPKI server is added or modified, where the PDU carries an identifier of a data type needed by the network device, and the network device and the RPKI server identify the identifier of the data type in the PDU, to implement subscription, unsubscription, sending, update, or update notification of the data of the specific data type. Therefore, the network device and the RPKI server can flexibly and dynamically negotiate the needed data type, and the RPKI server can pertinently synchronize validation data of the data type needed by the network device. Therefore, data synchronization overheads are reduced, and data synchronization efficiency is improved.

As shown in FIG. 13, based on a same technical concept, this application further provides a communication apparatus 1300. The communication apparatus 1300 is the foregoing network device. The apparatus 1300 includes a transceiver module 1301. The apparatus 1300 may further include a processing module 1302. The processing module 1302 is configured to generate a data request message. The transceiver module 1301 is configured to send the data request message to an RPKI server, where the data request message includes an identifier of a first data type, the data request message is used to request the RPKI server to send data corresponding to the first data type, and the RPKI server stores data of multiple data types, the first data type is at least one of the multiple data types. The transceiver module 1301 is configured to receive the data that is corresponding to the first data type and sent by the RPKI server.

In a possible implementation, the data request message is a data subscription message, and the data subscription message is used to request the RPKI server to send all data corresponding to the first data type.

In a possible implementation, the data subscription message is further used to request the RPKI server to send, when data stored in the RPKI server is subsequently updated, an update notification and updated data that are corresponding to only the first data type to the network device.

In a possible implementation, the data request message is a specific data reset query message, and the specific data reset query message is used to request the RPKI server to send all data corresponding to the first data type.

In a possible implementation, the data request message is a specific data serial number query message, and the specific data serial number query message is used to request the RPKI server to send updated data corresponding to the first data type.

In a possible implementation, the transceiver module 1301 is configured to send a data unsubscription message to the RPKI server, where the data unsubscription message includes an identifier of a second data type, the data unsubscription message is used to request the RPKI server not to send data corresponding to the second data type, and the second data type is at least one data type in the first data type.

In a possible implementation, the multiple data types include at least two of an internet protocol version 4 IPv4 prefix, an internet protocol version 6 IPv6 prefix, autonomous system provider authorization, and a router public key.

In another implementation, the transceiver module 1301 is configured to receive data that is corresponding to a fourth data type and sent by an RPKI server, where the fourth data type is one of multiple data types requested by the network device. The transceiver module 1301 is configured to receive a specific data sending end message sent by the RPKI server, where the specific data sending end message includes an identifier of the fourth data type, and the specific data sending end message is used to notify the network device that sending of the data of the fourth data type is completed. The processing module 1302 is configured to perform route validation based on the data corresponding to the fourth data type.

In a possible implementation, the multiple data types include at least two of an internet protocol version 4 IPv4 prefix, an internet protocol version 6 IPv6 prefix, autonomous system provider authorization, and a router public key.

As shown in FIG. 14, this application further provides a communication apparatus 1400. The communication apparatus 1400 is the foregoing RPKI server. The communication apparatus 1400 includes a transceiver module 1401. The communication apparatus 1400 may further include a processing module 1402. The transceiver module 1401 is configured to receive a data request message sent by a network device, where the data request message includes an identifier of a first data type, the RPKI server stores data of multiple data types, and the first data type is at least one of the multiple data types. The processing module 1402 is configured to parse the data request message to obtain the first data type. The transceiver module 1401 is configured to send data corresponding to the first data type to the network device.

In a possible implementation, the data request message is a data subscription message. The transceiver module 1401 is configured to send all data corresponding to the first data type to the network device.

In a possible implementation, the transceiver module 1401 is configured to send updated data corresponding to the first data type to the network device.

In a possible implementation, the data request message is a specific data reset query message, and the transceiver module 1401 is configured to send all data corresponding to the first data type to the network device.

In a possible implementation, the data request message is a specific data serial number query message, and the transceiver module 1401 is configured to send updated data corresponding to the first data type to the network device.

In a possible implementation, the transceiver module 1401 is configured to receive a data unsubscription message sent by the network device, where the data unsubscription message includes an identifier of a second data type, and the second data type is at least one data type in the first data type. The transceiver module 1401 is configured to: when the network device requests data from the RPKI server, send data corresponding to a third data type to the network device, where the third data type is a data type other than the second data type in the first data type.

In a possible implementation, the transceiver module 1401 is configured to send a specific data notification message to the network device, where the specific data notification message includes the identifier of the first data type, and the specific data notification message is used to notify the network device that the data corresponding to the first data type is updated, or notify the network device that the RPKI server has acknowledged the data request message, or notify the network device that the RPKI server is unable to respond to the data request message.

In a possible implementation, the multiple data types include at least two of an IPv4 prefix, an IPv6 prefix, autonomous system provider authorization, and a router public key.

In a possible implementation, the transceiver module 1401 is configured to: after completing sending of data corresponding to a fourth data type to the network device, send a specific data sending end message to the network device, where the specific data sending end message includes an identifier of the fourth data type, the specific data sending end message is used to notify the network device that sending of the data of the fourth data type is completed, and the fourth data type is one of multiple data types requested by the network device.

As shown in FIG. 15, this application further provides a communication apparatus 1500. The communication apparatus 1500 includes a processor 1501 and a communication interface 1502. The communication interface 1502 is configured to communicate with another communication apparatus. The processor 1501 is configured to run a group of instructions to perform operations performed by the network device or the RPKI server in the communication method in any one of the foregoing embodiments.

This application further provides a computer-readable storage medium. The computer-readable storage medium stores a computer program. When the computer program is executed by a computer, the communication method procedure in any one of the foregoing method embodiments is implemented.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, all or some of the technical solutions in this application may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A communication method, applied to a network device, wherein the method comprises:
sending a data request message to a resource public key infrastructure RPKI server, wherein the data request message comprises an identifier of a first data type, the data request message is used to request the RPKI server to send data corresponding to the first data type, the RPKI server stores data of multiple data types, and the first data type is at least one of the multiple data types; and
receiving the data that is corresponding to the first data type and sent by the RPKI server.

2. The method according to claim 1, wherein the data request message is a data subscription message, and the data subscription message is used to request the RPKI server to send all data corresponding to the first data type.

3. The method according to claim 2, wherein the data subscription message is further used to request the RPKI server to send, when data stored in the RPKI server is updated, an update notification and updated data that are corresponding to only the first data type to the network device.

4. The method according to claim 1, wherein the data request message is a specific data reset query message, and the specific data reset query message is used to request the RPKI server to send all data corresponding to the first data type.

5. The method according to claim 1, wherein the data request message is a specific data serial number query message, and the specific data serial number query message is used to request the RPKI server to send updated data corresponding to the first data type.

6. The method according to any one of claims 1 to 5, wherein after the sending a data request message to an RPKI server, the method further comprises:
sending a data unsubscription message to the RPKI server, wherein the data unsubscription message comprises an identifier of a second data type, the data unsubscription message is used to request the RPKI server not to send data corresponding to the second data type, and the second data type is at least one data type in the first data type.

7. The method according to any one of claims 1 to 6, wherein the multiple data types comprise at least two of an internet protocol version 4 IPv4 prefix, an internet protocol version 6 IPv6 prefix, autonomous system provider authorization, and a router public key.

8. A communication method, applied to an RPKI server, wherein the method comprises:
receiving a data request message sent by a network device, wherein the data request message comprises an identifier of a first data type, the RPKI server stores data of multiple data types, and the first data type is at least one of the multiple data types; and
sending data corresponding to the first data type to the network device.

9. The method according to claim 8, wherein the data request message is a data subscription message, and the sending data corresponding to the first data type to the network device comprises:
sending all data corresponding to the first data type to the network device.

10. The method according to claim 9, wherein after the sending, by the RPKI server, all data corresponding to the first data type to the network device, the method further comprises:
sending updated data corresponding to the first data type to the network device.

11. The method according to claim 8, wherein the data request message is a specific data reset query message, and the sending data corresponding to the first data type to the network device comprises:
sending all data corresponding to the first data type to the network device.

12. The method according to claim 8, wherein the data request message is a specific data serial number query message, and the sending data corresponding to the first data type to the network device comprises:
sending updated data corresponding to the first data type to the network device.

13. The method according to any one of claims 8 to 12, wherein the method further comprises:
receiving a data unsubscription message sent by the network device, wherein the data unsubscription message comprises an identifier of a second data type, and the second data type is at least one data type in the first data type; and
when the network device requests data from the RPKI server, sending data corresponding to a third data type to the network device, wherein the third data type is a data type other than the second data type in the first data type.

14. The method according to any one of claims 8 to 13, wherein the method further comprises:
sending a specific data notification message to the network device, wherein the specific data notification message comprises the identifier of the first data type, and the specific data notification message is used to notify the network device that the data corresponding to the first data type is updated, or notify the network device that the RPKI server has acknowledged the data request message, or notify the network device that the RPKI server is unable to respond to the data request message.

15. The method according to any one of claims 8 to 13, wherein the multiple data types comprise at least two of an IPv4 prefix, an IPv6 prefix, autonomous system provider authorization, and a router public key.

16. A communication method, applied to an RPKI server, wherein the method comprises:
after completing sending of data corresponding to a fourth data type to a network device, sending a specific data sending end message to the network device, wherein the specific data sending end message comprises an identifier of the fourth data type, the specific data sending end message is used to notify the network device that sending of the data of the fourth data type is completed, and the fourth data type is one of multiple data types requested by the network device.

17. A communication method, applied to a network device, wherein the method comprises:
receiving data that is corresponding to a fourth data type and sent by an RPKI server, wherein the fourth data type is one of multiple data types requested by the network device;
receiving a specific data sending end message sent by the RPKI server, wherein the specific data sending end message comprises an identifier of the fourth data type, and the specific data sending end message is used to notify the network device that sending of the data of the fourth data type is completed; and
in response to the specific data sending end message, performing route validation based on the data corresponding to the fourth data type.

18. A communication apparatus, wherein the apparatus comprises a transceiver module, wherein
the transceiver module is configured to send a data request message to an RPKI server, wherein the data request message comprises an identifier of a first data type, the data request message is used to request the RPKI server to send data corresponding to the first data type, the RPKI server stores data of multiple data types, and the first data type is at least one of the multiple data types; and
the transceiver module is configured to receive the data that is corresponding to the first data type and sent by the RPKI server.

19. A communication apparatus, wherein the apparatus comprises a transceiver module, wherein
the transceiver module is configured to receive a data request message sent by a network device, wherein the data request message comprises an identifier of a first data type, the RPKI server stores data of multiple data types, and the first data type is at least one of the multiple data types; and
the transceiver module is configured to send data corresponding to the first data type to the network device.

20. A communication apparatus, wherein the apparatus comprises a transceiver module, wherein
the transceiver module is configured to: after completing sending of data corresponding to a fourth data type to a network device, send a specific data sending end message to the network device, wherein the specific data sending end message comprises an identifier of the fourth data type, the specific data sending end message is used to notify the network device that sending of the data of the fourth data type is completed, and the fourth data type is one of multiple data types requested by the network device.

21. A communication apparatus, wherein the apparatus comprises a transceiver module and a processing module, wherein
the transceiver module is configured to receive data that is corresponding to a fourth data type and sent by an RPKI server, wherein the fourth data type is one of multiple data types requested by the apparatus;
the transceiver module is configured to receive a specific data sending end message sent by the RPKI server, wherein the specific data sending end message comprises an identifier of the fourth data type, and the specific data sending end message is used to notify the apparatus that sending of the data of the fourth data type is completed; and
the processing module is configured to perform route validation based on the data corresponding to the fourth data type.

22. A communication apparatus, wherein the apparatus comprises a processor and a communication interface, the communication interface is configured to communicate with another communication apparatus, and the processor is configured to run a group of instructions to perform the communication method according to any one of claims 1 to 7, 8 to 15, 16, or 17.

23. A computer-readable storage medium, comprising instructions, wherein when the computer-readable storage medium runs on a computer, the computer is enabled to perform the communication method according to any one of claims 1 to 7, 8 to 15, 16, or 17.
